# EUROPEAN PATENT SPECIFICATION

(11) **EP 1 067 739 B1**
(45) Date of publication and mention of the grant of the patent: **11.05.2005**
(21) Application number: 99113208.5
(22) Date of filing: 08.07.1999
(51) Int. Cl.: H04L 12/56

(54) **Mobile data communication system with subscription based quality of service**
Mobiles Datenkommunikationssystem mit subscriptionbasierte Dienstqualität
Système de communication de données mobile à qualité de service basée sur l'abonnement.

(43) Date of publication of application: 10.01.2001
(73) Proprietor: SIEMENS AKTIENGESELLSCHAFT, 80333 München (DE)
(72) Inventor: Havmoller, Leo, 9400 Norresundby (DK); Rysgaard, Bent, 9220 Aalborg (DK)

(56) References cited:
- EP-A- 0 782 364
- WO-A-95/07578
- WO-A-98/45966

## Description

### State of the art

The invention relates to a communication system according to the generic class of the independent patent claim. The GSM system has the possibility to exchange data packets between the mobile station and the base station (GPRS: general packet data radio system). For the processing of the data packets the system contains a quality of service profile (QoS profile) that determines how the data packets are handled, both individually and in contrast to other data packets.

According to a solution presented in WO 98/45966, the overall performance of the network can be enhanced especially by enhancing the utilization of the reverse link. As usually in the GSM networks, the base station controller coordinates the communication between remote stations. The channel scheduler in the base station controller collects information on how much data is to be transmitted, the available reversed link capacity for transmission in the network, and other parameters. Based on the collected information and in accordance with a list of these controls and a list of system goals the channel scheduler then assigns a maximum scheduled transmission rate.

The maximum scheduled transmission rate is sent to the remote station. The mobile station receives the scheduling information and configures the transmitter to begin data transmission with a data rate below or equal to the maximum scheduled transmission rate. As a consequence, when the reverse link is only lightly loaded, the remote station can transmit at any rate up to the maximum scheduled transmission rate; this on its behalf reduces the scheduling delay. However, the solution presented in the '966 does not solve the problem of wasting the radio interface capacity if the mobile station keeps on requesting quality of service above the usual subscription or the maximum quality of service supported by the network

### Advantage of the invention

The communication system according to the features of the independent patent claim has the advantage that the Quality of Service profile (QoS profile) is adapted according to the subscription of the users.

Useful improvements of the invention derive from the features of the independent patent claim.

### Drawing

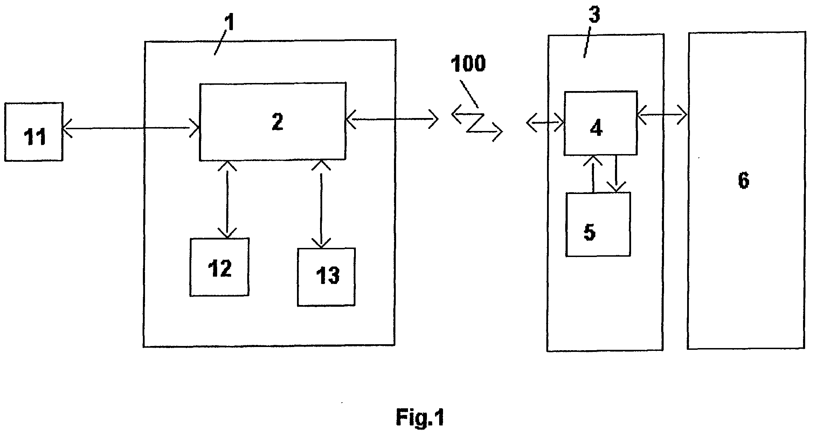

The invention is shown in the Figure of the single drawing and described in detail in the description.

### Description

The Figure shows a communication system comprising a mobile station 1 and a fixed network 3,6. The fixed network 3,6 comprises a base station 3 and a wire or wireless based network 6. The wire based network 6 supplies an exchange of information between different base stations 3 or access to data processing facilities that comprise information about a subscription of the user of the mobile station. Further, the network 6 has access to a conventional telephone system and other types of data stations that may supply data for a user of the mobile station (internet, fax, etc.).

The mobile station 1 and the base station 3 are capable of exchanging data over a wireless "air interface" 100. The mobile station comprises a processing unit 2 capable of processing data from or for different data station 11, 12, 13 and exchanging the data via the air interface 100 with the base station 3. The processing unit 2 is also capable of receiving data from the base station 3 and supply those data to the data stations 11, 12, 13. The base station 3 also comprises a processing unit 4 that processes the data exchanged over the air interface 100 and send or receive those data to or from the connected network 6 capable of handling packet switched data communication in some manner. The base station further contains a memory 5 capable of exchanging information with the processing unit 4. This memory 5 is used for storing control information that is related to the processing of data by the processing unit 4.

The invention is related to the exchange of data between the mobile station 1 and the base station 3 in the form of data packets, in the GSM/UMTS system called general packet radio service, GPRS. In this mode of operation larger blocks of information are divided into smaller packets and the information are sent over the air interface 100 in small data packets. An example of this type of exchange of data is found for instance in the GSM system where it is called General Packet Radio Services, GPRS. The transport network has a possibility to smooth situations where high traffic occurs and delay some of the data packets. These delayed data packets are sent at a later point in time when the demand to the network is not that high.

Some of the data packets are more important than other packets. Therefore, the whole system comprising the mobile station 1, base station 3 and the network 6 contain information about how the data packets sent from or sent to a certain data station 11, 12, 13 should be handled. The GPRS network therefore stores information called Quality of Service, QoS, that contains information about how data packets from or to a specific address should be handled. This information is stored in a QoS profile containing data related to the precedence, reliability, delay and the user data throughput.

For the parameter precedence there are three different priority classes (high, normal, low) and the data packets with high precedence will be transported ahead of other precedence levels, the data packets with normal precedence will be transported ahead of the data packets with low priority and the data packets with low precedence will only be transported if there are no high or normal priority data packets pending.

Related to the reliability there are also three different reliability classes and within each reliability class there are probabilities assigned that a data packet gets lost, duplicated, the sequence of the data packets is disturbed, or that the content of the data packets are delivered with an undetected error.

The parameter delay is related to the transport from a sender to a receiver.

The parameter throughput has two sub parameters wherein this sub parameters the maximum possible data rate and a mean data rate are defined.

According to the invention the mobile station 1 comprises a data processing unit 2 that is capable of requesting a certain QoS profile from the base station 3 and the network 6 based on or in compliance with limitations set by a subscription of a mobile station user.

For the further description it will be assumed that the data station 11 is a computer that is used as an internet access, data station 12 is an e-mail system and data station 13 is a video system that is capable of sending and/or receiving video data. As an example the data station 11 is located outside the mobile station 1 whereas the data stations 12 and 13 are incorporated in the mobile station 1. It is also possible that all these components are integrated in the mobile station 1 or that they are located outside the mobile station and that the mobile station is simply used as an interface.

According to the invention there is a communication between the fixed network 3, 6 and the mobile station 1 related to the maximum admissible QoS profile. The fixed network 3, 6 sends a restriction message to the mobile station 1 containing information about the maximum allowable QoS-parameters. The mobile station 1 or the user of the mobile station has the possibility to request from the fixed network 3, 6 a specific QoS profile. Based on the restriction message the mobile station 1 will not try to request a QoS profile that is not admissible.

According to the invention, the restriction of the possible QoS profile arises from a limited subscription of the user. The user therefore can select different qualities of the service he gets from the network by his subscription. For a low cost subscription the quality of a service profile of a user might be limited. If the user is willing to pay an extra fee he might get an premium service, that guarantees good access to all network resources at any time. The mobile station 1 therefore has the ability to request a QoS profile from the network. If a mobile station repeatedly requests a QoS profile that is not allowed by the subscription or by any other reason, the air interface 100 is strained with unnecessary traffic that has no use at all. This unnecessary traffic on the air interface 100 is avoided by the invention.

Besides a limited subscription of the network there also may be the possibility that the network is not capable to supply a specific QoS profile. The method is also useful in this case, since also in this case unnecessary traffic over the air interface 100 is avoided.

Repeated requests of the mobile for a specific QoS profile may arise for different reasons. A user might try to request a QoS profile even though he knows or if he is not aware that his subscription does not cover this request. Further there is a possibility that the mobile station comprises an automatic QoS selection algorithm that tries to establish a specific QoS profile based on the current situation of the mobile station. Such a situation may arise if a mobile station 1 gets connected to an application 11, 12, 13 that requires a specific QoS profile. For example, if the mobile station 1 is used to exchange video data of the application 13 the mobile station 1 might request a very high data rate, that is beyond the subscription or the possibilities of the fixed network 3, 6. An e-mail system 12 might require a too high reliability, that is not covered by the subscription. To avoid the situation that a mobile station with a connected data station 11, 12, 13 or an internal data station 11, 12, 13 tries repeatedly to establish a QoS profile that is appropriate for the specific data station, it is useful to use the invention by not allowed the mobile station 1 to request a QoS profile that is out of the bounds that was signalled from the fixed network 3, 6.

## Claims

1. A communication system comprising at least a mobile station (MS) and a base station (BS) connected to a network, said mobile station (MS) and said base station (BS) adapted to exchange data packets via an air interface according to a first QoS profile, whereby said first QoS profile is defined by at least one QoS parameter contained in a restriction message sent to the mobile station (MS),
**characterized in that**
the mobile station (MS) is capable of sending a message via the base station (BS) to the network requesting a second QoS profile for the transmission of data packets based on or in compliance with limitations set by a subscription of a MS user as well as the first QoS profile.

2. A communication system according to claim 1,
**characterized in that**
said restriction message contains information regarding a maximum allowed value to said at least one QoS-parameter.

3. A communication system according to claim 1 or 2,
**characterized in that**
said mobile station (MS) comprises a processing unit capable of selecting the second QoS profile to be requested by an automatic algorithm taking into account the current situation of the mobile station (MS).

## Patentansprüche

1. Ein Kommunikationssystem, das zumindest aus einer Mobilstation (MS) und einer Basisstation (BS) besteht, die mit einem Netz verbunden sind, wobei besagte Mobilstation (MS) und besagte Basisstation (BS) für den Austausch von Datenpaketen über eine Luftschnittstelle entsprechend einem ersten QoS-Profil ausgelegt sind und besagtes erstes QoS-Profil durch zumindest einen QoS-Parameter definiert wird, der in einer Einschränkungsmeldung enthalten ist, die an die Mobilstation (MS) gesendet wird,
**dadurch gekennzeichnet, dass**
die Mobilstation (MS) in der Lage ist, über die Basisstation (BS) an das Netz eine Meldung zu senden, in der ein zweites QoS-Profil für die Übertragung von Datenpaketen auf Basis bzw. unter Beachtung der durch die Subskription eines MS-Benutzers sowie des ersten QoS-Profils vorgegebenen Einschränkungen angefordert wird.

2. Ein Kommunikationssystem entsprechend Anspruch 1,
**dadurch gekennzeichnet, dass**
besagte Einschränkungsmeldung Informationen hinsichtlich eines maximal zulässigen Wertes für besagten zumindest einen QoS-Parameter enthält.

3. Ein Kommunikationssystem entsprechend Anspruch 1 oder 2,
**dadurch gekennzeichnet, dass**
besagte Mobilstation (MS) eine Verarbeitungseinheit enthält, die in der Lage ist, das zweite QoS-Profil auszuwählen, das unter Berücksichtigung der aktuellen Situation der Mobilstation (MS) durch einen automatischen Algorithmus anzufordern ist.

## Revendications

1. Système de communication qui comprend au moins un poste mobile (MS) et un poste de base (BS) connectés à un réseau, ledit poste mobile (MS) et ledit poste de base (BS) convenant pour échanger des paquets de données par l'intermédiaire d'une interface radio selon un premier profil de QoS, ledit premier profil de QoS étant défini par au moins un paramètre QoS contenu dans un message de restriction envoyé au poste mobile (MS),
**caractérisé en ce que**
le poste mobile (MS) peut envoyer un message au réseau par l'intermédiaire du poste de base (BS) en demandant un deuxième profil de QoS pour la transmission de paquets de données sur base des limitations établies par l'abonnement de l'utilisateur du MS ou conformément à ces dernières, ainsi que le premier profil de QoS.

2. Système de communication selon la revendication 1,
**caractérisé en ce que**
ledit message de restriction comprend des informations qui concement une valeur maximale autorisée dudit au moins un paramètre de QoS présent.

3. Système de communication selon les revendications 1 ou 2,
**caractérisé en ce que**
ledit poste mobile (MS) comprend une unité de traitement qui peut sélectionner le deuxième profil de QoS à demander à l'aide d'un algorithme automatique qui prend en compte la situation du poste mobile (MS) à cet instant.
